(19) Europäisches Patentamt
European Patent Office
Office européen des brevets

(11) EP 0 700 940 B1

(12) # EUROPÄISCHE PATENTSCHRIFT

(45) Veröffentlichungstag und Bekanntmachung des Hinweises auf die Patenterteilung:
**04.02.1998 Patentblatt 1998/06**

(51) Int Cl.6: **C08F 290/06**, C08L 51/08

(21) Anmeldenummer: **95112627.5**

(22) Anmeldetag: **11.08.1995**

(54) **Allylphenolterminierte, mit Maleinsäureanhydrid gepfropfte Polycarbonate und ihre Verwendung zur Herstellung von Blends mit Polyamid und die Blends**

Maleic anhydride grafted polycarbonate having allylphenol end groups, and their use for the manufacture of blends with polyamides, and these blends

Polycarbonate grefté par de l'anhydride maléique et terminé par des groupes allylphénol, leur utilisation pour la préparation de mélanges avec des polyamides, et ces mélanges

(84) Benannte Vertragsstaaten:
**BE DE FR GB IT NL**

(30) Priorität: **24.08.1994 DE 4429979**

(43) Veröffentlichungstag der Anmeldung:
**13.03.1996 Patentblatt 1996/11**

(73) Patentinhaber: **BAYER AG**
**51368 Leverkusen (DE)**

(72) Erfinder:
- **Köhler, Burkhard, Dr.**
**D-47829 Krefeld (DE)**
- **Horn, Klaus, Dr.**
**D-41539 Dormagen (DE)**

(56) Entgegenhaltungen:
**EP-A- 0 009 747** **EP-A- 0 293 908**
**EP-A- 0 520 506**

- **DATABASE WPI Week 9008 Derwent Publications Ltd., London, GB; AN 90-054139 & JP-A-02 006 514 (MITSUBISHI GAS CHEMICAL), 10.Januar 1990**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 700 940 B1

**Beschreibung**

Die Erfindung betrifft Polycarbonate (PC), die mit Allylphenolen, vorzugsweise Eugenol, abgebrochen sind und anschließend mit Maleinsäureanhydrid (MSA) in der Schmelze gepfropft werden und ihre Verwendung als Blendpartner für Polyamide (PA) sowie die Polycarbonat/Polyamid-Mischungen.

Mit Vinylmonomeren gepfropfte Polycarbonate mit Eugenol als Endgruppe sind aus EP-A 520 506 bekannt. Pfropfungsprodukte mit Maleinsäureanhydrid werden nicht beschrieben.

Anhydridterminierte Polycarbonate werden in EP-A 270 809 beschrieben. Sie werden als Blendpartner für Polyamid eingesetzt. Die Blends zeigen für einige Anwendungen eine nicht ausreichende Reißdehnung. Ferner ist der PC-Anteil noch methylenchloridlöslich.

Die Aufgabe der vorliegenden Erfindung ist die Bereitstellung von neuen allylphenolterminierten, mit Maleinsäureanhydrid gepfropften aromatischen Polycarbonaten, die sich mit Polyamid zu Blends mit hoher Reißdehnung und guter Lösungsmittelbeständigkeit mischen lassen.

Gegenstand der Erfindung sind daher allylphenolterminierte aromatische Polycarbonate, die mit Maleinsäureanhydrid gepfropft sind, wobei Allylphenol der Formel (II)

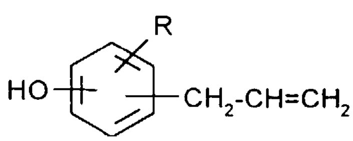

wobei

R für Wasserstoff, $C_1$-$C_{22}$-Alkyl, $C_6$-$C_{12}$-Cycloalkyl, $C_6$-$C_{14}$-Aryl oder $C_1$-$C_{18}$-Alkoxy steht,

sowie Isoeugenol und Allylnaphthol als Kettenabbrecher verwendet werden.

Die Polycarbonate werden vorzugsweise mit 0,2 bis 5, insbesondere 1 bis 3 Gew.-% (bezogen auf 100 Gew.-% Polycarbonat) Maleinsäureanhydrid gepfropft. Bevorzugt sind aromatische Polycarbonate, bei deren Polymerisation 1,5 bis 8,5, vorzugsweise 2 bis 6 Mol-% Allylphenole als Kettenabbrecher eingesetzt werden (bezogen auf eingesetzte Mole Diphenole) und die mit 0,2 bis 5, insbesondere 1 bis 3 Gew.-% Maleinsäureanhydrid bepfropft sind.

Die allylphenolterminierte Polycarbonatkomponente ist sowohl ein Homopolycarbonat als auch ein Copolycarbonat, wobei auch Mischungen von Polycarbonaten sowohl von Homopolycarbonaten als auch von Copolycarbonaten als auch Gemische davon geeignet sind.

Die allylphenolterminierten Polycarbonate haben in der Regel Gewichtsmittelmolekulargewichte $\overline{M}_w$ (ermittelt beispielsweise in bekannter Weise über die relative Lösungsviskosität oder durch Gelchromatographie nach vorheriger Eichung) von 10.000 bis 200.000, vorzugsweise von 20.000 bis 80.000.

Die allylphenolterminierten Polycarbonate sind solche auf Basis der Diphenole der Formel (I)

$$HO\text{-}D\text{-}OH \qquad (I)$$

worin D ein zweibindiger aromatischer Rest von 6 bis 50 C-Atomen, insbesondere von 12 bis 45 C-Atomen, ist, der noch Heteroatome oder C-haltige Heterosegmente enthalten kann, welche nicht unter den 6 bis 50 C-Atomen subsummiert sind.

Die allylphenolterminierten Polycarbonate haben somit bifunktionelle Struktureinheiter der Formel (II)

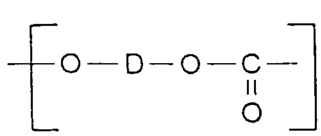

(II)

worin D die vorstehend genannte Bedeutung hat.

Geeignete Diphenole der Formel (I) sind beispielsweise solche der Formel (Ia)

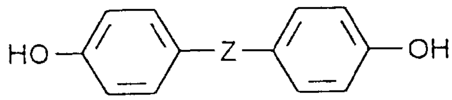

(Ia)

worin Z eine Einfachbindung, ein Alkylen-Rest mit 1 bis 8 C-Atomen, ein Alkyliden-Rest mit 2 bis 12 C-Atomen, ein Cyclohexyliden-Rest, ein Benzyliden-Rest, ein Methyl-benzyliden-Rest, -Rest, ein Bis-(phenyl)-methylen-Rest, -S-, $-SO_2-$, -CO- oder -O- ist.

Geeignete Diphenole der Formel (I) sind beispielsweise auch solche der Formel (Ib)

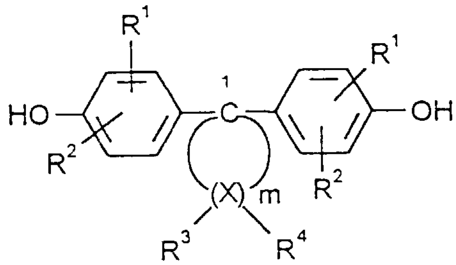

(Ib)

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | eine ganze Zahl von 4 bis 7, bevorzugt 4 oder 5, |
| $R^3$ und $R^4$, | für jedes X individuell wählbar, unabhängig voneinander Wasserstoff oder $C_1$-$C_6$-Alkyl |

und

| | |
|---|---|
| X | Kohlenstoff bedeuten, |

mit der Maßgabe, daß an mindestens einem Atom X $R^3$ und $R^4$ gleichzeitig Alkyl bedeuten.

Diese Diphenole sowie Polycarbonate daraus sind in DE-OS 3 832 396 beschrieben.

Beispiele für Diphenole der Formel (I) sind

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide und
α,α'-Bis(hydroxyphenyl)-diisopropylbenzole.

Diese und weitere geeignete Diphenole der Formel (I) sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 0956, 3 832 396 der französischen Patentschrift 1 561 518, in der Monographie "H. Schnell, Chemistry and Physics of Polycarbonates, Interscience Publishers, New York 1964" beschrieben.

Bevorzugte Diphenole der Formel (I) sind beispielsweise:

4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
$\alpha,\alpha'$-Bis-(4-hydroxyphenyl)-p-diisopropylbenzol und
1,1-Bis-(4-hydroxyphenyl)-3,3,5-trimethylcyclohexan.

Besonders bevorzugte Diphenole der Formel (I) sind beispielsweise:

2,2-Bis-(4-hydroxyphenyl)-propan,
1,1-Bis-(4-hydroxyphenyl)-cyclohexan und
1,1-Bis-(4-hydroxyphenyl)-3,3,5-trimethylcyclohexan.

Insbesondere sind 2,2-Bis-(4-hydroxyphenyl)-propan und 1,1-Bis-(4-hydroxyphenyl)-3,3,5 trimethylcyclohexan bevorzugt.

Die Diphenole der Formel (I) können sowohl einzeln als auch im Gemisch eingesetzt werden.

Die Polycarbonate können darüber hinaus in bekannter Weise (siehe beispielsweise DE-PS 2 500 092 und US-PS 4 185 009) durch den Einbau geringer Mengen, vorzugsweise zwischen 0,05 und 2 Mol-%, bezogen auf eingesetzte Diphenole, an drei oder mehr als dreifunktionellen Verbindungen, beispielsweise solchen mit drei oder mehr als drei OH-Gruppen verzweigt sein.

Einige der verwendeten Verbindungen mit drei oder mehr als drei phenolischen Hydroxygruppen sind beispielsweise Phloroglucin, 4,6-Dimethyl-2,4,6-tri(4-hydroxyphenyl)-heptan, 1,3,5-Tri-(4-hydroxyphenol)-benzol, 1,1,1-Tri(-4-hydroxyphenyl)-ethan, 2,6-Bis-(2'-hydroxy-5'-methyl-benzyl)-4-methylphenyl, 2-(4-hydroxyphenyl)-2-(2,4-dihydroxyphenyl)-propan und 1,4-Bis-(4,4'-dihydroxytriphenyl-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3 dihydroindol. Die Herstellung der Polycarbonate beispielsweise aus den Diphenolen der Formel a)1) ist literaturbekannt oder nach literaturbekannten Verfahren herstellbar. (Siehe dazu beispielsweise H. Schnell, Chemistry and Physics of Polycarbonates, Interscience Publishers, New York, 1964 oder US-Patente 3 028 365 und 3 275 601).

Als Kettenabbrecher zur Regelung des Molekulargewichts und Einführung der Allylgruppen dienen Allylphenole der Formel (II)

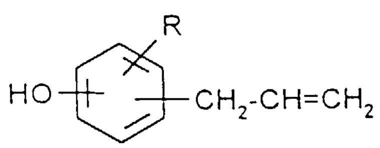

(II)

wobei R für Wasserstoff, $C_1$-$C_{22}$-Alkyl, $C_6$-$C_{12}$-Cycloalkyl, $C_6$-$C_{14}$-Aryl oder $C_1$-$C_{18}$-Alkoxy, vorzugsweise für Methoxy oder Wasserstoff steht, sowie Isoeugenol und Allylnaphthol. Besonders bevorzugte Allylphenole sind 2-Allylphenol, 4-Allylphenol, Eugenol und Isoeugenol, ganz besonders bevorzugt ist Eugenol.

Die allylphenolterminierten, mit Maleinsäureanhydrid bepfropfte Polycarbonate können analog dem in EP-A 520 506 beschriebenen Verfahren hergestellt werden.

Sie lassen sich weiterhin auch durch Schmelzevermischung von allylphenolterminierten Polycarbonaten und 0,2 bis 5 Gew.-% (bezogen auf 100 Gew.-% Polycarbonat) Maleinsäureanhydrid bei Temperaturen von 220 bis 360°C in Knetern oder Extrudern herstellen. Dieses Verfahren ist ebenfalls Gegenstand der Erfindung.

Ein weiterer Gegenstand der Erfindung ist die Verwendung der erfindungsgemäßen Polycarbonate zur Herstellung von Polyamid-Mischungen.

Gegenstand der Erfindung sind weiterhin thermoplastische Formmassen enthaltend

A) 40 bis 95, vorzugsweise 60 bis 90 Gew.-% allylphenolterminierte, mit Maleinsäureanhydrid bepfropfte Polycarbonate,

B) 5 bis 60, vorzugsweise 10 bis 40 Gew.-% Polyamide und

C) 0 bis 20 Gew.-% epoxy- oder anhydrid- und/oder säurefunktionelle Kautschuke,

wobei die Summe aus A + B + C 100 ergibt.

Die Polyamidkomponente B) ist entweder ein Homopolyamid oder ein Copolyamid; es können auch Mischungen der Polyamide eingesetzt werden.

Erfindungsgemäß einsetzbare Polyamide sind an sich bekannt und umfassen z.B. Polyamide mit Molekulargewichten von 5.000 oder mehr, wie sie z.B. in den US-Patentschriften 2 071 250, 2 071 251, 2 130 523, 2 130 948, 2 241 322, 2 312 966, 2 512 906 und 3 393 210 beschrieben sind.

Die Polyamide können z.B. durch Kondensation äquimolarer Mengen einer gesättigten oder aromatischen Dicarbonsäure mit 4 bis 12 Kohlenstoffatomen, mit einem Diamin, welches 4 bis 14 Kohlenstoffatomen aufweist, hergestellt werden, oder durch Kondensation von -Aminocarbonsäuren oder durch Polyaddition von Lactamen. Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactam erhaltenen Polyamide, wie Polycaprolactam, Polylaurinsäurelactam, ferne Poly-11-aminoundecansäure und Di-(p-aminocyclohexyl)-methandodecandisaureamid. Es ist auch möglich, gemäß der Erfindung Polyamide zu verwenden, die durch Copolykondensation von zwei oder mehr der oben genannten Polymeren oder ihrer Komponenten hergestellt worden sind, z.B. ein Copolymeres aus Adipinsäure, Isophthalsäure und Hexamethylendiamin. Vorzugsweise sind die Polyamide linear und haben Schmelzpunkte von mehr als 200°C bei einer Glastemperatur von unter 60°C oder im Falle amorpher Polyamide eine Glastemperatur von 80 bis 200°C.

Bevorzugte Polyamide sind Polyhexamethylenadipinsäureamid, Polyhexamethylensebacinsäureamid und Polycaprolactam. Die Polyamide weisen im allgemeinen eine relative Viskosität von 2,5 bis 5 auf, bestimmt an einer 1-%igen Lösung in m-Kresol bei 25°C, was einem Molekulargewicht $\overline{M}w$ von etwa 15.000 - 45.000 entspricht.

Die erfindungsgemäß verwendeten Kautschuke gemäß Komponente C) sind Terpolymere aus

1. 55 Gew.-% bis 85 Gew.-% Ethylen, Propylen, Butadien oder Isopren mit
2. 5 Gew.-% bis 40 Gew.-% Alkencarbonsäuren oder deren Ester und mit
3. 1 Gew.-% bis 17 Gew.-% Maleinsäureanhydrid

oder aus

1. 55 Gew.-% bis 85 Gew.-% Ethylen, Propylen, Butadien oder Isopren mit
2. 5 Gew.-% bis 40 Gew.-% Alkencarbonsäuren oder deren Ester und mit

3 1 Gew.-% bis 17 Gew.-% epoxyfunktionellen Monomeren, vorzugsweise Glycidylmethacrylat und/oder Glycidylacrylat und/oder Allylglycidylether.

Als Alkencarbonsäuren kommen alle derartigen Verbindungen in Frage, die mit den oben genannten Olefinen polymerisiert werden können, vorzugsweise $C_3$-$C_6$-Alkencarbonsäuren. Beispielsweise sind zu nennen: Acrylsäure, Methacrylsäure, Itaconsäure, Aconitsäure und/oder Fumarsäure. Besonders bevorzugt sind Acrylsäure und/oder Methacrylsäure.

Als Ester der Alkencarbonsäuren kommen Ester der oben genannten Alkencarbonsäuren von Alkoholen mit 1 bis 8 Kohlenstoffatomen in Frage. Besonders geeignet sind die Ester der Acrylsäure mit $C_1$-$C_8$-Alkoholen. Ganz besonders zeichnen sich die Ester der Acrylsäure mit Methanol, Ethanol oder 1-Butanol aus. Es können aber auch Mischungen aus verschiedenen $C_1$-$C_8$-Alkylestern von $C_3$-$C_6$-Alkencarbonsäuren verwendet werden.

Das Maleinsäureanhydrid kann entweder während der Synthese der Kautschuke als polymerbildender Baustein zugesetzt oder durch übliche Pfropfreaktion auf eine vorgebildete Kautschuk-Pfropfgrundlage polymerisiert werden.

Die Kautschuke der Komponente C) können nach allen bekannten Polymerisationsverfahren (Emulsions-, Lösungs-, Masse-, Suspensions-, Fällungspolymerisation) sowie nach Kombinationen aus diesen Verfahren hergestellt werden.

Bei der Herstellung der säureanhydridgruppenhaltigen Kautschuke durch Pfropfreaktion wird das aufzupfropfende Monomere in Gegenwart der vorgebildeten Propfgrundlage polymerisiert. Es bildet sich dabei neben dem eigentlichen Pfropfpolymerisat auch freies Homopolymerisat. Als Pfropfprodukte wird somit jeweils die Summe der eigentlichen Pfropfcopolymerisate und der freien Polymerisate verstanden. Die Menge des aufgepfropften Monomeren und das Molekulargewicht des Homopolymerisats kann in weiten Grenzen durch Variation der Polymerisationsbedingungen beeinflußt werden. Hierzu gehören vor allem: Art des Polymerisationsverfahrens, Temperatur, Aktivatorsystem, Molekulargewichtsregler, Rührbedingungen und Art der Monomer-Dosierung.

Die erfindungsgemäß einzusetzenden Kautschuke sollen im wesentlichen unvernetzt sein, d.h. sie sollen zu mindestens 90 % in heißen Lösungsmitteln wie z.B. Toluol, Ethylbenzol oder Tetrachlorethylen löslich sein. Die Kautschuke

besitzen Schmelzpunkte von 20 bis 160°C, vorzugsweise von 40 bis 100°C. Die Schmelzpunkte wurden nach der DSC-Methode (Differential-Scanning-Calorimeter-Methode) bestimmt.

Die Herstellung der erfindungsgemäßen Mischungen aus den Komponenten A), B) und C) erfolgt in der Weise, daß man getrocknetes Polyamid mit dem Kautschuk der Komponente C) schmelzcompoundiert wird. Dieser Blend wird nach Trocknung mit dem Polycarbonat schmelzcompoundiert.

Für diese Herstellung der erfindungsgemäßen Mischungen können die üblichen Zweiwellenextruder, vorzugsweise solche mit Entgasung, verwendet werden.

Die Schmelzcompoundierung sowohl in der ersten als auch in der zweiten Stufe wird zwischen 250°C und 320°C, vorzugsweise zwischen 270°C und 300°C durchgeführt.

Gegenstand der vorliegenden Erfindung ist somit auch ein Verfahren zur Herstellung der erfindungsgemäßen Mischungen aus den Komponenten A), B) und C), das dadurch gekennzeichnet ist, daß man in der ersten Stufe getrocknetes Polyamid innerhalb des erfindungsgemäßen Mengenbereichs mit dem Kautschuk gemäß Komponente C) innerhalb des erfindungsgemäßen Mengenbereichs bei Temperaturen zwischen 250°C und 320°C, vorzugsweise zwischen 270°C und 300°C schmelzcompoundiert, danach das erhaltene Gemisch trocknet, und dann in einer zweiten Stufe mit dem erfindungsgemäßen Polycarbonat wiederum bei Temperaturen zwischen 250°C und 320°C, vorzugsweise zwischen 270°C und 300°C schmelzcompoundiert und das erhaltene Gemisch anschließend in bekannter Weise abkühlt und granuliert.

Den erfindungsgemäßen Mischungen können noch die für die Komponenten A), B) und C) bekannten Additive in bekannten Mengen vor oder während oder nach der Herstellung der erfindungsgemäßen Mischungen in den für die Komponenten A), B) oder C) üblichen Mengen eingearbeitet werden.

Geeignete Additive sind Weichmacher, Fließmittel, Stabilisatoren gegen UV-Licht, Hitze, Feuchtigkeit und gegen $O_2$-Einwirkung, Pigmente und Flammschutzmittel.

Gegenstand der vorliegenden Erfindung sind somit auch Mischungen bestehend aus den erfindungsgemäßen Komponenten A), B) und C) und mindestens einem Zusatz, ausgewählt aus Weichmachern, Fließmitteln, Stabilisatoren, Pigmenten und Flammschutzmitteln.

Gegenstand der vorliegenden Erfindung ist auch ein Verfahren zur Herstellung der erfindungsgemäßen Mischungen, bestehend aus den erfindungsgemäßen Komponenten A), B) und C) und mindestens einem Zusatz, ausgewählt aus Weichmachern, Fließmitteln, Stabilisatoren, Pigmenten und Flammschutzmitteln, das dadurch gekennzeichnet ist, daß man vor oder während oder nach der Herstellung der erfindungsgemäßen Mischungen aus den Komponenten A), B) und C) mindestens einen der genannten Zusätze in den für die Komponenten A), B) oder C) üblichen Mengen in bekannter Weise einarbeitet.

Die erfindungsgemäßen Mischungen können in bekannter Weise zu Formkörpern oder Halbzeugen verarbeitet werden, beispielsweise durch Extrusion oder Spritzguß.

Die Formkörper finden Verwendung als Gehäuse für elektrische oder elektronische Geräte oder im Automobilbereich.

## Beispiele

### Beispiel 1

Herstellung eines eugenolterminierten Polycarbonats

Man legt 8 kg 45 % NaOH, 40 l Wasser, 4560 g Bisphenol A, 105 g Eugenol (3,5 Mol-%), 13,2 kg Chlorbenzol und 37,2 kg Methylenchlorid vor, phosgeniert durch einleiten von 3 kg Phosgen, katalysiert die Kondensation mit 28 ml N-Ethylpiperidin und läßt 1 h nachrühren. Die organische Phase wird im Ausdampfextruder (ZSK 32) bei 330°C eingedampft.

Man erhält ein eugenolterminiertes Polycarbonat mit einer relativen Lösungsviskosität von 1,31 (0,5 %ige Lösung in Methylenchlorid bei 25°C).

### Beispiel 2

Herstellung des MSA-gepfropften Polycarbonats (erfindungsgemäß)

Man compoundiert auf einem Extruder (ZSK 32) bei 280°C die Mischung aus 98 Gew.-% Polycarbonat nach Beispiel 1 und 2 Gew.-% Maleinsäureanhydrid. Die relative Lösungsviskosität des erhaltenen Polymeren beträgt 1,35.

**Beispiel 3**

Eugenol-terminiertes, mit MSA gepfropfte PC/Polyamid-Mischung

Man compoundiert auf einem Extruder (ZSK 32) bei 280°C die Mischung aus 80 Gew.-% Polycarbonat nach Beispiel 2 mit 20 Gew.-% Polyamid 6.

Man erhält eine Mischung mit einer Reißdehnung von 101 %, einem Zugmodul (DIN 53455) von 2600 MPa und einer Kerbschlagzähigkeit (ISO 180/1A) von 12 kJ/$m^2$. Sie ist in Methylenchlorid (15 min Einwirkung) nicht löslich.

**Beispiel 4**

PC/PA/Kautschuk-Mischung

Man compoundiert auf einem Extruder (ZSK 32) bei 280°C die Mischung aus 70 Gew.-% Polycarbonat nach Beispiel 2 mit 20 Gew.-% Polyamid 6 und 10 Gew.-% eines epoxyfunktionellen Terpolymers (Lotader AX 8660® der Fa. CdF).

Man erhält eine Mischung mit einer Reißdehnung von 124 %, einem Zugmodul von 2000 MPa und einer Kerbschlagzähigkeit von 23 kJ/$m^2$. Sie ist in Methylenchlorid (15 min Einwirkung) nicht löslich.

**Patentansprüche**

1. Allylphenolterminierte aromatische Polycarbonate, die mit Maleinsäureanhydrid gepfropft sind, wobei Allylphenole der Formel II

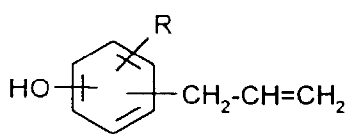

wobei

R für Wasserstoff, $C_1$-$C_{22}$-Alkyl, $C_6$-$C_{12}$-Cydoalkyl, $C_6$-$C_{14}$-Aryl oder $C_1$-$C_{18}$-Alkoxy steht,

sowie Isoeugenol und Allylnaphthol als Kettenabbrecher verwendet werden.

2. Polycarbonate gemäß Anspruch 1, die mit 0,2 bis 5 Gew.-% (bezogen auf 100 Gew.-% Polycarbonat) Maleinsäureanhydrid gepfropft sind.

3. Verfahren zur Herstellung von Polycarbonaten gemäß Anspruch 1, wobei die gepfropften allylphenolterminierten aromatischen Polycarbonate durch Schmelzvermischung von allylphenolterminierten Polycarbonaten mit Maleinsäureanhydrid bei Temperaturen von 220 bis 360°C in Knetern oder Extrudern hergestellt werden.

4. Verwendung der Polycarbonate gemäß Anspruch 1 zur Herstellung von Polyamid-Mischungen.

5. Thermoplastische Formmassen enthaltend

A) 40 bis 95 Gew.-% allylphenolterminierte, mit Maleinsäureanhydrid gepfropfte Polycarbonate gemäß Anspruch 1,

B) 5 bis 60 Gew.-% Polyamide und

C) 0 bis 20 Gew.-% epoxy- oder anhydrid und/oder säurefunktionelle Kautschuke,

wobei die Summe aus A + B + C 100 ergibt, und gegebenenfalls Additiven ausgewählt aus Weichmacher, Fließmitteln, Stabilisatoren, Pigmenten und Flammschutzmitteln.

## Claims

1. Allylphenol-terminated aromatic polycarbonates which are grafted with maleic anhydride, wherein allyl phenols of the formula II

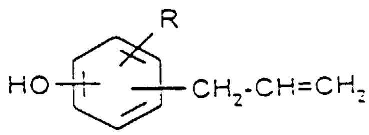

wherein

R represents hydrogen or a $C_1$-$C_{22}$-alkyl, $C_6$-$C_{12}$-cycloalkyl, $C_6$-$C_{14}$-aryl or $C_1$-$C_{18}$-alkoxy group,

and isoeugenol and allylnaphthol are used as chain terminators.

2. Polycarbonates according to Claim 1, which are grafted with 0.2 to 5 wt.% (with reference to 100 wt.% of polycarbonate) of maleic anhydride.

3. Process for preparing polycarbonates according to Claim 1, wherein the grafted allylphenol-terminated aromatic polycarbonates are prepared by mixing allylphenol-terminated polycarbonates with maleic anhydride in the melt at temperatures of 220 to 360°C in kneaders or extruders.

4. Use of polycarbonates according to Claim 1 to prepare polyamide mixtures.

5. Thermoplastic moulding compositions containing

   A) 40 to 95 wt.% of allylphenol-terminated polycarbonates grafted with maleic anhydride in accordance with Claim 1,

   B) 5 to 60 wt.% of polyamide and

   C) 0 to 20 wt.% of epoxy- or anhydride- and/or acid-functional rubbers,

   wherein the sum of A+B+C is 100, and optionally additives such as plasticisers, flow promoters, stabilisers, pigments and flame retardants.

## Revendications

1. Polycarbonates aromatiques à motifs terminaux d'allylphénols, greffés par l'anhydride maléique, pour lesquels on a utilisé en tant que coupeurs de chaîne des allylphénols de formule II

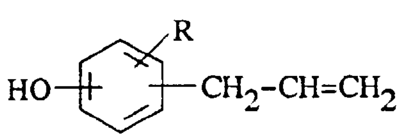

dans laquelle

R représente l'hydrogène, un groupe alkyle en $C_1$-$C_{22}$, cycloalkyle en $C_6$-$C_{12}$, aryle en $C_6$-$C_{14}$ ou alcoxy en $C_1$-$C_{18}$,

ou encore l'isoeugénol ou l'allylnaphtol.

2. Polycarbonates selon revendication 1, greffés par 0,2 à 5 % en poids (pour 100 % en poids du polycarbonate)

d'anyhdride maléique.

3. Procédé de préparation des polycarbonates selon revendication 1, selon lequel on mélange à l'état fondu dans des malaxeurs ou des extrudeuses à des températures de 220 à 360°C les polycarbonates à motifs terminaux d'allylphénols avec l'anhydride maléique.

4. Utilisation des polycarbonates selon la revendication 1 pour la préparation de mélanges avec des polyamides.

5. Matières à mouler thermoplastiques contenant

A) 40 à 95 % en poids de polycarbonates à motifs terminaux d'allylphénol, greffés par l'anhydride maléique, selon revendication 1,
B) 5 à 60 % en poids de polyamides et
C) 0 à 20 % en poids de caoutchoucs à fonction époxy ou anhydride et/ou acide, la somme de A + B + C représentant 100 % en poids, avec le cas échéant des additifs choisis parmi les plastifiants, les agents fluidifiants, les stabilisants, les pigments et les agents ignifugeants.